# EUROPEAN PATENT APPLICATION

(11) **EP 4 582 851 A1**
(43) Date of publication of application: **09.07.2025**
(21) Application number: 23862385.4
(22) Date of filing: 05.09.2023
(51) Int. Cl.: G02B 27/01

(54) **ADJUSTMENT METHOD AND APPARATUS, AND VEHICLE**

(30) Priority: 05.09.2022 CN 202211078290
(71) Applicant: Shenzhen Yinwang Intelligent Technologies Co., Ltd., Shenzhen, Guangdong 518129 (CN)
(72) Inventor: ZHA, Jingfang, Shenzhen, Guangdong 518129 (CN); YANG, Jinghuan, Shenzhen, Guangdong 518129 (CN); ZHANG, Daiqi, Shenzhen, Guangdong 518129 (CN); SONG, Xianxi, Shenzhen, Guangdong 518129 (CN); WU, Gang, Shenzhen, Guangdong 518129 (CN)
(74) Representative: Maiwald GmbH
(86) International application number: PCT/CN2023/117021
(87) International publication number: WO 2024/051691

(57) **Abstract**

Embodiments of this application provide an adjustment method, an apparatus, and a carrier. The method may be applied to a cabin of the carrier. The cabin includes a first area. A head-up display apparatus is disposed in the cabin. The head-up display apparatus is configured to display information to a user in the first area. The method includes: obtaining an image captured by a camera in the cabin, when it is detected that the user is in the first area; determining eye position information of the user based on the image; and adjusting the head-up display apparatus based on the eye position information when a first operation of the user is detected. Embodiments of this application may be applied to an intelligent vehicle or an electric vehicle, to help improve an intelligentization degree of the vehicle and also help improve user experience.

## Description

This application claims priority to Chinese Patent Application No. 202211078290.2, filed with the China National Intellectual Property Administration on September 5, 2022 and entitled "ADJUSTMENT METHOD, APPARATUS, AND CARRIER", which is incorporated herein by reference in its entirety.

### TECHNICAL FIELD

Embodiments of this application relate to the field of intelligent cabins, and more specifically, to an adjustment method, an apparatus, and a carrier.

### BACKGROUND

With intelligentization of vehicles, an increasing quantity of vehicles are configured with head-up display (head-up display, HUD) apparatuses. Currently, a user may manually adjust a height of a virtual image presented by a HUD. In this case, an operation of adjusting the HUD by the user is excessively complex. This causes poor user experience.

### SUMMARY

Embodiments of this application provide an adjustment method, an apparatus, and a carrier, to help improve an intelligentization degree of the carrier and also help improve user experience.

The carrier in this application may include a road transportation means, a water transportation means, an air transportation means, an industrial device, an agricultural device, an entertainment device, or the like. For example, the carrier may be a vehicle. The vehicle is a vehicle in a broad sense, and may be a transportation means (such as a commercial vehicle, a passenger vehicle, a motorcycle, a flying vehicle, or a train), an industrial vehicle (such as a pallet truck, a trailer, or a tractor), an engineering vehicle (such as an excavator, a bulldozer, or a crane), an agricultural device (such as a lawn mower or a harvester), an entertainment device, a toy vehicle, or the like. A type of the vehicle is not specifically limited in embodiments of this application. For another example, the carrier may be a transportation means such as an aircraft or a ship.

According to a first aspect, an adjustment method is provided. The method may be applied to a cabin of a carrier. The cabin includes a first area. A head-up display apparatus is disposed in the cabin. The head-up display apparatus is configured to display information to a user in the first area. The method includes: obtaining an image captured by a camera in the cabin, when it is detected that the user is in the first area; determining eye position information of the user based on the image; and adjusting the head-up display apparatus based on the eye position information when a first operation of the user is detected.

In embodiments of this application, when it is detected that the user is in the first area in the cabin, the image may be obtained by using the camera in the cabin, and the eye position information of the user is determined based on the image. The head-up display apparatus may be adjusted based on the eye position information when the first operation of the user is detected. In this way, the user does not need to manually adjust the head-up display apparatus, which reduces learning costs when the user adjusts the head-up display apparatus, avoids a complex operation of the user in a process of adjusting the head-up display apparatus, helps improve an intelligentization degree of the carrier, and helps improve user experience.

In some possible implementations, the obtaining an image captured by a camera in the cabin, when it is detected that the user is in the first area includes: when it is detected that the user is in the first area, obtaining an image that is of the user and that is captured by the camera in the cabin.

In some possible implementations, the eye position information may be one or more pieces of eye position information.

For example, the eye position information may be one piece of eye position information determined based on an image obtained at a moment, or may be one piece of eye position information determined based on an image obtained in a time period, or may be a plurality of pieces of eye position information determined based on an image obtained in a time period.

For another example, when the eye position information is one piece of eye position information, the head-up display apparatus may be adjusted based on the piece of eye position information. Alternatively, when the eye position information is a plurality of pieces of eye position information, the head-up display apparatus may be adjusted based on the plurality of pieces of eye position information.

In some possible implementations, the eye position information may include an eye position of the user.

In some possible implementations, for example, the carrier is a vehicle, and the obtaining an image captured by a camera in the cabin, when it is detected that the user is in the first area includes: obtaining the image captured by the camera in the cabin, when it is detected that the user is in the first area, the vehicle is in a parking gear, and the head-up display apparatus is started.

In some possible implementations, detecting that the user is in the first area includes: detecting a change from no user presence to user presence in the first area.

With reference to the first aspect, in some implementations of the first aspect, the adjusting the head-up display apparatus based on the eye position information when a first operation of the user is detected includes: adjusting the head-up display apparatus based on the eye position information when an operation of pressing a brake pedal by the user is detected.

Because pressing the brake pedal before the vehicle travels is a habitual operation of the user, in embodiments of this application, adjustment of the head-up display apparatus is combined with the habitual operation of the user. When it is detected that the user presses the brake pedal, the head-up display apparatus is adjusted based on the eye position information of the user, so that the head-up display apparatus is adjusted in a user-unaware state. This reduces learning costs of the user in the process of adjusting the head-up display apparatus, avoids a complex operation of the user in the process of adjusting the head-up display apparatus, and helps improve user experience.

With reference to the first aspect, in some implementations of the first aspect, the adjusting the head-up display apparatus based on the eye position information when a first operation of the user is detected includes: adjusting the head-up display apparatus based on the eye position information when an operation of adjusting a gear from the parking gear to another gear by the user is detected.

Because engaging the gear before the vehicle travels is a habitual operation of the user, in embodiments of this application, adjustment of the head-up display apparatus is combined with the habitual operation of the user. When an operation of engaging the gear by the user is detected, the head-up display apparatus is adjusted based on the eye position information of the user, so that the head-up display apparatus is adjusted in the user-unaware state. This reduces learning costs of the user in the process of adjusting the head-up display apparatus, avoids a complex operation of the user in the process of adjusting the head-up display apparatus, and helps improve user experience.

In some possible implementations, detecting the operation of pressing the brake pedal by the user includes: detecting that an opening degree of the brake pedal is greater than or equal to a preset threshold.

In some possible implementations, detecting the operation of adjusting the gear from the parking gear to the another gear by the user includes: detecting an operation of adjusting the gear from the parking gear to a drive gear by the user.

With reference to the first aspect, in some implementations of the first aspect, the determining eye position information of the user based on the image includes: determining the eye position information based on the image obtained within first preset duration, where an end moment of the first preset duration is a moment at which the first operation is detected.

For example, the first operation is the operation of pressing the brake pedal by the user. In consideration of the fact that an eye of the user may gaze at the gear when the user presses the brake pedal, the head-up display apparatus may be adjusted based on the eye position information determined based on the image existing within a period of time before the operation of pressing the brake pedal by the user is detected. This can improve accuracy of the eye position information, and help improve accuracy of adjusting the head-up display apparatus, so that a height of a virtual image presented by the head-up display apparatus better conforms to a habit of the user.

In some possible implementations, the determining eye position information of the user based on the image includes: determining the eye position information based on the image obtained, when the first operation is detected.

In some possible implementations, the first operation may be that the user makes a preset gesture. Alternatively, the first operation may be that the user sends a voice instruction. The voice instruction is used to instruct to adjust the head-up display apparatus. Alternatively, the first operation may be that the user taps a control on a vehicle-mounted display. Alternatively, the first operation may be that the user presses a button on a steering wheel. Alternatively, the first operation may be an operation of manipulating a lever by the user.

With reference to the first aspect, in some implementations of the first aspect, the method further includes: when the first operation of the user is detected, controlling the head-up display apparatus to display prompt information, where the prompt information is used to prompt the user that the head-up display apparatus is being adjusted.

In embodiments of this application, when the first operation of the user is detected, the head-up display apparatus may be further controlled to display the prompt information. In this way, the user can clearly learn that the head-up display apparatus is being adjusted currently, which helps improve user experience.

With reference to the first aspect, in some implementations of the first aspect, the method further includes: when adjustment of the head-up display apparatus is completed, stopping obtaining the image.

In embodiments of this application, when adjustment of the head-up display apparatus is completed, obtaining of the image may be stopped. This helps reduce computing resources of the carrier, and avoids a resource waste caused in the process of constantly adjusting the head-up display apparatus.

In some possible implementations, stopping, when adjustment of the head-head-up display apparatus is completed, obtaining the image may also be understood as stopping, when adjustment of the head-head-up display apparatus is completed, obtaining the image of the user, or may be understood as stopping, when adjustment of the head-head-up display apparatus is completed, adjusting the head-head-up display apparatus.

With reference to the first aspect, in some implementations of the first aspect, the obtaining an image captured by a camera in the cabin, when it is detected that the user is in the first area includes: obtaining the image when it is detected that the user is in the first area and an operation of adjusting a seat in the first area by the user is detected. The adjusting the head-up display apparatus based on the eye position information when a first operation of the user is detected includes: in a process of detecting that the user adjusts the seat, adjusting the head-up display apparatus based on a change of the eye position information.

In embodiments of this application, in a process in which the user adjusts the seat, the carrier may adjust the head-up display apparatus in real time based on the change of the eye position information of the user. In this way, the process of adjusting the seat is combined with the process of adjusting the head-up display apparatus, and the user can complete adjustment of the head-up display apparatus in the process of adjusting the seat. This avoids a complex operation of the user in the process of adjusting the head-up display apparatus, helps improve the intelligentization degree of the carrier, and helps improve user experience.

With reference to the first aspect, in some implementations of the first aspect, the method further includes: in the process of detecting that the user adjusts the seat, controlling the head-up display apparatus to display prompt information, where the prompt information is used to prompt the user that the head-up display apparatus is being adjusted.

In embodiments of this application, in the process of detecting that the user adjusts the seat, the head-up display apparatus may be controlled to display the prompt information. In this way, the user can clearly learn that the head-up display apparatus is being adjusted currently and learn heights of the virtual image presented by the head-up display apparatus in different seat statuses, so that the user completes adjustment of the head-up display apparatus in the process of adjusting the seat, which helps improve user experience.

With reference to the first aspect, in some implementations of the first aspect, the method further includes: when it is detected that the user stops the operation of adjusting the seat, stopping adjusting the head-up display apparatus.

In embodiments of this application, when adjustment of the seat is completed, adjustment of the head-up display apparatus may be stopped. This helps reduce computing resources of the carrier, and avoids a resource waste caused in the process of constantly adjusting the head-up display apparatus.

In some possible implementations, the method further includes: when it is detected that the user stops the operation of adjusting the seat, stopping obtaining the image.

With reference to the first aspect, in some implementations of the first aspect, the method further includes: within second preset duration starting from detecting that the user stops the operation of adjusting the seat, adjusting the head-up display apparatus based on a change of the eye position information.

In embodiments of this application, after the user completes adjustment of the seat, a period of time may be reserved for the user to continue to adjust a sitting posture of the user. In a process in which the user adjusts the sitting posture, the head-up display apparatus may further continue to be adjusted in real time based on the change of eye position information of the user. In this way, when both a seat posture and a body posture meet the habit of the user, adjustment of the head-up display apparatus is completed, which helps improve user experience.

With reference to the first aspect, in some implementations of the first aspect, the method further includes: when the second preset duration ends, stopping adjusting the head-up display apparatus.

In embodiments of this application, when the second preset duration ends, adjustment of the head-up display apparatus may be stopped. This helps reduce computing resources of the carrier, and avoids a resource waste caused in the process of constantly adjusting the head-up display apparatus.

With reference to the first aspect, in some implementations of the first aspect, the determining eye position information of the user based on the image includes: filtering out interference data in the image; and determining the eye position information based on the image in which the interference data is filtered out.

In embodiments of this application, when the eye position information of the user is determined, the interference data in the image may be filtered out. This helps improve accuracy of the eye position information, to help improve accuracy of adjusting the head-up display apparatus.

With reference to the first aspect, in some implementations of the first aspect, the adjusting the head-up display apparatus based on the eye position information includes: determining, based on the eye position information, the height of the virtual image presented by the head-up display apparatus; and adjusting the head-up display apparatus based on the height.

In some possible implementations, the determining the height of the virtual image presented by the head-up display apparatus may also be understood as determining a projection height of the head-up display apparatus.

With reference to the first aspect, in some implementations of the first aspect, the carrier is a vehicle, and the first area includes a driver area or a front passenger area.

According to a second aspect, an adjustment apparatus is provided. The apparatus is configured to adjust a head-up display apparatus in a cabin of a carrier. The cabin includes a first area. The head-up display apparatus is configured to display information to a user in the first area. The apparatus includes: a detection unit, configured to detect whether the user is in the first area; an obtaining unit, configured to obtain an image captured by a camera in the cabin, when the detection unit detects that the user is in the first area; a determining unit, configured to determine eye position information of the user based on the image; and an adjustment unit, configured to adjust the head-up display apparatus based on the eye position information when the detection unit detects a first operation of the user.

With reference to the second aspect, in some implementations of the second aspect, the adjustment unit is configured to adjust the head-up display apparatus based on the eye position information when the detection unit detects an operation of pressing a brake pedal by the user.

With reference to the second aspect, in some implementations of the second aspect, the adjustment unit is configured to adjust the head-up display apparatus based on the eye position information when the detection unit detects an operation of adjusting a gear from a parking gear to another gear by the user.

With reference to the second aspect, in some implementations of the second aspect, the determining unit is configured to determine the eye position information based on the image obtained within first preset duration, where an end moment of the first preset duration is a moment at which the first operation is detected.

With reference to the second aspect, in some implementations of the second aspect, the apparatus further includes: a control unit, configured to: when the detection unit detects the first operation of the user, control the head-up display apparatus to display prompt information, where the prompt information is used to prompt the user that the head-up display apparatus is being adjusted.

With reference to the second aspect, in some implementations of the second aspect, the obtaining unit is further configured to: when adjustment of the head-up display apparatus is completed, stop obtaining the image.

With reference to the second aspect, in some implementations of the second aspect, the obtaining unit is configured to: obtain the image captured by the camera, when the detection unit detects that the user is in the first area and detects an operation of adjusting a seat in the first area by the user; and the adjustment unit is configured to: in a process in which the detection unit detects that the user adjusts the seat, adjust the head-up display apparatus based on a change of the eye position information.

With reference to the second aspect, in some implementations of the second aspect, the apparatus further includes: a control unit, configured to: in the process in which the detection unit detects that the user adjusts the seat, control the head-up display apparatus to display prompt information, where the prompt information is used to prompt the user that the head-up display apparatus is being adjusted.

With reference to the second aspect, in some implementations of the second aspect, the adjustment unit is further configured to: when the detection unit detects that the user stops the operation of adjusting the seat, stop adjusting the head-up display apparatus.

With reference to the second aspect, in some implementations of the second aspect, the adjustment unit is further configured to: within second preset duration starting from detecting, by the detection unit, that the user stops the operation of adjusting the seat, adjust the head-up display apparatus based on a change of the eye position information.

With reference to the second aspect, in some implementations of the second aspect, the adjustment unit is further configured to: when the second preset duration ends, stop adjusting the head-up display apparatus.

With reference to the second aspect, in some implementations of the second aspect, the determining unit is configured to: filter out interference data in the image; and determine the eye position information based on the image in which the interference data is filtered out.

With reference to the second aspect, in some implementations of the second aspect, the determining unit is further configured to determine, based on the eye position information, a height of a virtual image presented by the head-up display apparatus; and the adjustment unit is configured to adjust the head-up display apparatus based on the height.

With reference to the second aspect, in some implementations of the second aspect, the carrier is a vehicle, and the first area includes a driver area or a front passenger area.

According to a third aspect, an adjustment apparatus is provided. The apparatus includes a processing unit and a storage unit. The storage unit is configured to store instructions, and the processing unit executes the instructions stored in the storage unit, to enable the apparatus to perform any one of the possible methods in the first aspect.

According to a fourth aspect, an adjustment system is provided. The system includes a head-up display apparatus and a computing platform. The computing platform includes any one of the possible apparatuses in the second aspect or the third aspect.

According to a fifth aspect, a carrier is provided. The carrier includes any one of the possible apparatuses in the second aspect or the third aspect, or includes the adjustment system in the fourth aspect.

In some possible implementations, the carrier is a vehicle.

According to a sixth aspect, a computer program product is provided. The computer program product includes computer program code. When the computer program code is run on a computer, the computer is enabled to perform any one of the possible methods in the first aspect.

It should be noted that all or some of the computer program code may be stored in a first storage medium. The first storage medium may be packaged together with a processor, or may be packaged separately from a processor. This is not specifically limited in embodiments of this application.

According to a seventh aspect, a computer-readable medium is provided. The computer-readable medium stores program code. When the computer program code is run on a computer, the computer is enabled to perform any one of the possible methods in the first aspect.

According to an eighth aspect, an embodiment of this application provides a chip system. The chip system includes a processor configured to invoke a computer program or computer instructions stored in a memory, to enable the processor to perform any one of the possible methods in the first aspect or the second aspect.

With reference to the eighth aspect, in a possible implementation, the processor is coupled to the memory through an interface.

With reference to the eighth aspect, in a possible implementation, the chip system further includes the memory. The memory stores the computer program or computer instructions.

Embodiments of this application provide an adjustment method, an apparatus, and a carrier. When the first operation of the user is detected, the head-up display apparatus may be adjusted based on the eye position information. This reduces learning costs when the user adjusts the head-up display apparatus, avoids a complex operation of the user in the process of adjusting the head-up display apparatus, helps improve the intelligentization degree of the carrier, and helps improve user experience. Adjustment of the head-up display apparatus is combined with the habitual operation of the user. When it is detected that the user presses the brake pedal, the head-up display apparatus is adjusted based on the eye position information of the user, so that the head-up display apparatus is adjusted in the user-unaware state. In consideration of the fact that the eye of the user may gaze at the gear when the user presses the brake pedal, the head-up display apparatus may be adjusted based on the eye position information determined based on the image existing within the period of time before the operation of pressing the brake pedal by the user is detected. This can improve accuracy of the eye position information of the user, and help improve accuracy of adjusting the head-up display apparatus, so that the height of the virtual image presented by the head-up display apparatus better conforms to the habit of the user. The prompt information is displayed, so that the user can clearly learn that the head-up display apparatus is being adjusted currently, which helps improve user experience. When adjustment of the head-up display apparatus is completed, obtaining of the image may be stopped. This helps reduce computing resources of the carrier, and avoids a resource waste caused in the process of constantly adjusting the head-up display apparatus.

In the process of adjusting the seat, the head-up display apparatus may be adjusted in real time based on the change of the eye position information of the user. In this way, the process of adjusting the seat is combined with the process of adjusting the head-up display apparatus, and the user can complete adjustment of the head-up display apparatus in the process of adjusting the seat. This avoids a complex operation of the user in the process of adjusting the head-up display apparatus, helps improve the intelligentization degree of the carrier, and helps improve user experience. After adjustment of the seat is completed, the period of time may be reserved for the user to continue to adjust the sitting posture of the user. In the process in which the user adjusts the sitting posture, the head-up display apparatus may further be adjusted in real time based on the change of eye position information of the user. In this way, when both the seat posture and the body posture meet the habit of the user, adjustment of the head-up display apparatus is completed, which helps improve user experience. When the second preset duration ends, adjustment of the head-up display apparatus may be stopped. This helps reduce computing resources of the carrier, and avoids a resource waste caused in the process of constantly adjusting the head-up display apparatus.

### BRIEF DESCRIPTION OF DRAWINGS

FIG. 1 is a functional block diagram of a vehicle according to an embodiment of this application;
FIG. 2 is a diagram of a structure of a windshield head-up display W-HUD system according to an embodiment of this application;
FIG. 3(a) to FIG. 3(d) show a group of graphical user interfaces GUIs according to an embodiment of this application;
FIG. 4 shows another group of GUIs according to an embodiment of this application;
FIG. 5(a) to FIG. 5(e) show another group of GUIs according to an embodiment of this application;
FIG. 6 shows another group of GUIs according to an embodiment of this application;
FIG. 7 is a schematic flowchart of an adjustment method according to an embodiment of this application;
FIG. 8 is another schematic flowchart of an adjustment method according to an embodiment of this application;
FIG. 9 is another schematic flowchart of an adjustment method according to an embodiment of this application;
FIG. 10 is a block diagram of an adjustment apparatus according to an embodiment of this application; and
FIG. 11 is a block diagram of an adjustment system according to an embodiment of this application.

### DESCRIPTION OF EMBODIMENTS

The following describes technical solutions in embodiments of this application with reference to accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The modifiers "first", "second", and the like in embodiments of this application are merely intended to distinguish between different objects, and do not constitute a limitation on positions, sequences, priorities, quantities, content, or the like of the described objects. In embodiments of this application, use of modifiers, such as ordinal numbers, used to distinguish between the described objects does not constitute a limitation on the described objects. For descriptions of the described objects, refer to descriptions in a context in the claims or embodiments. The use of such a modifier should not constitute an unnecessary limitation. In descriptions of embodiments, unless otherwise specified, "a plurality of" means two or more.

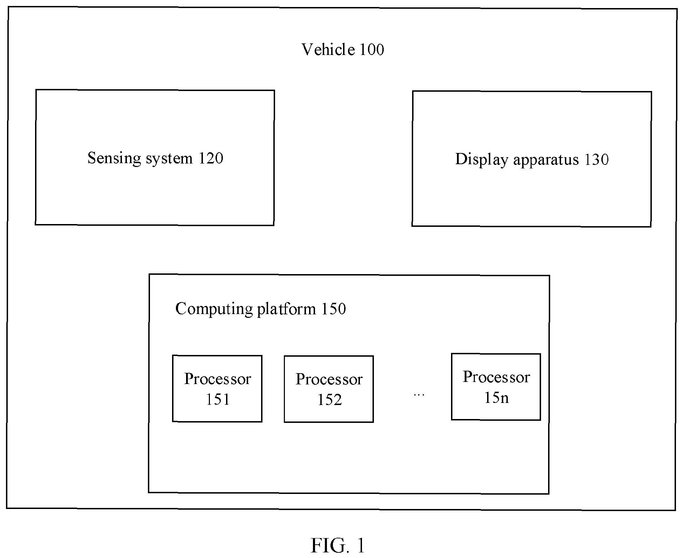

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about a surrounding environment of the vehicle 100. For example, the sensing system 120 may include a positioning system. The positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and an image shooting apparatus.

Some or all functions of the vehicle 100 are controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit, and the logical relationship of the hardware circuit is fixed or reconfigurable. For example, the processor is an application-specific integrated circuit (application-specific integrated circuit, ASIC) or a hardware circuit, for example, a field programmable gate array (field programmable gate array, FPGA), implemented by using a programmable logic device (programmable logic device, PLD). In the reconfigurable hardware circuit, a process in which the processor loads a configuration document to implement hardware circuit configuration may be understood as a process in which the processor loads instructions to implement functions of some or all of the units. In addition, the processor may be a hardware circuit designed for artificial intelligence. The hardware circuit designed for artificial intelligence may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory and execute the instructions, to implement corresponding functions.

The display apparatus 130 in a cabin is mainly classified into two types: A first type is a vehicle-mounted display, and a second type is a projection display, for example, a HUD. The vehicle-mounted display is a physical display, and is an important part of an in-vehicle information entertainment system. A plurality of displays may be disposed in the cabin, for example, a digital instrument display, a central control screen, a display in front of a passenger (also referred to as a front-seat passenger) in a front passenger seat, a display in front of a rear-seat passenger on the left, and a display in front of a rear-seat passenger on the right. Even a vehicle window may be used as a display for display. The head-up display, also referred to as a head-up display system, is mainly configured to display driving information, such as a speed per hour and navigation, on a display device (for example, a windshield) in front of a driver, to reduce gaze shift time of the driver, avoid a pupil change caused by a gaze shift of the driver, and improve traveling safety and comfort. The HUD includes, for example, a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may alternatively have another type of system with technology evolution. This is not limited in this application.

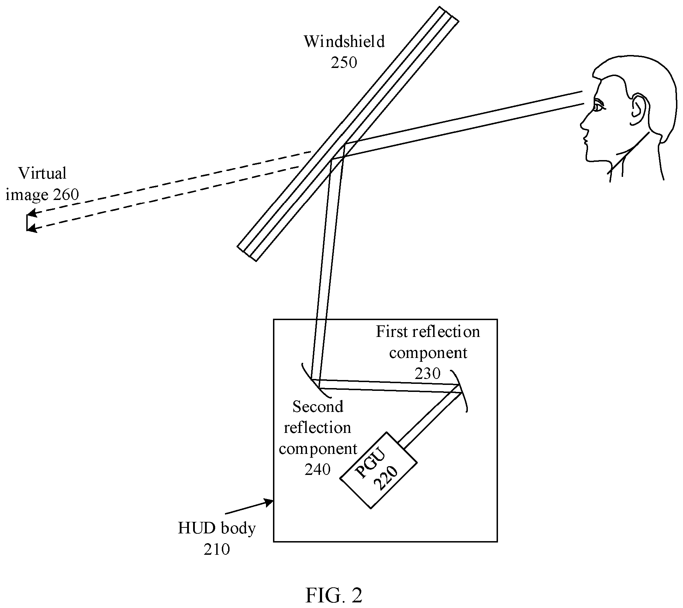

FIG. 2 is a diagram of a structure of a W-HUD system according to an embodiment of this application. As shown in FIG. 2, the system includes a HUD body 210, a picture generating unit (picture generating unit, PGU) 220, a first reflection component 230 (for example, a plane mirror or a curved mirror), a second reflection component 240 (for example, a plane mirror or a curved mirror), and a windshield 250. An optical imaging principle of the W-HUD system is as follows: A picture generated by the PGU is reflected to a human eye by using the first reflection component 230, the second reflection component 240, and the windshield 250. Because an optical system has magnification effect and effect of increasing an optical path length, a user may see, outside a cabin, a virtual image 260 with a depth of field. Currently, the W-HUD system is widely applied to in-vehicle assisted driving, for example, displaying a vehicle speed, a warning light, navigation, and an advanced driver-assistance system (advanced driver-assistance system, ADAS).

Because different users have different sitting postures and heights, eye heights of the users may also be different. For example, after getting on a vehicle, a user A may adjust, by using a button or a knob, a height of the virtual image presented by the HUD (for example, to a height 1), so that the height 1 of the virtual image matches an eye height of the user A. After a user B gets on the vehicle, because a sitting posture and a height of the user A are different from those of the user B, the height 1 of the virtual image is not a height that matches an eye height of the user B. As a result, the user B sees a distorted virtual image or cannot see the virtual image. In this case, the user B also needs to adjust, by using the button or the knob, the height of a position of the virtual image presented by the HUD (for example, to a height 2), so that the height 2 of the virtual image matches the eye height of the user B. For a common consumer, especially a consumer who uses the HUD for the first time, a process for specifically learning how to use the HUD is required. In this case, learning costs of the user are increased, and a process in which the user adjusts the HUD is complex. This causes poor user experience.

Embodiments of this application provide an adjustment method, an apparatus, and a carrier, to determine eye position information of a user based on an image captured by a camera in a cabin, so as to automatically adjust a HUD based on the eye position information. In this way, the user does not need to manually adjust the HUD, to help improve an intelligentization degree of the carrier and also help improve user experience.

The eye position information may include one or more types of eye position information such as an eye position, a position of an area in which an eye is located, or a gaze direction. For example, the area in which the eye of the user is located may be a rectangular area, an oval area, a circular area, or the like. A projection position of the HUD is adjusted based on the eye position information, to improve efficiency and accuracy of adjusting the HUD, and improve user experience.

Adjusting the HUD may include adjusting a height of a virtual image presented by the HUD, or adjusting a height of a projection of the HUD, or adjusting a projection position of the HUD.

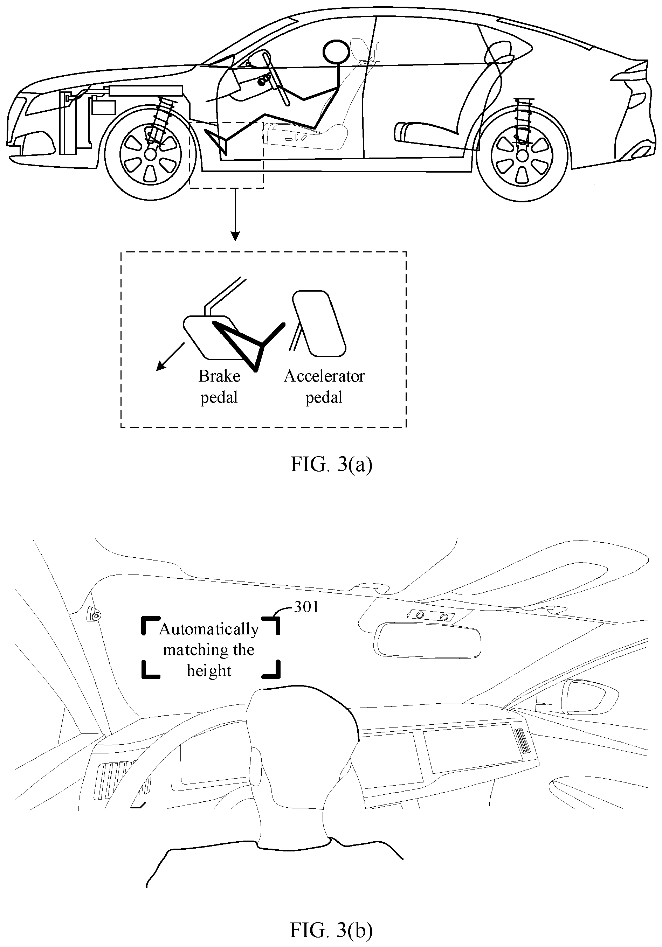

For example, the eye position information is an eye position. FIG. 3(a) to FIG. 3(d) show a group of graphical user interfaces (graphical user interfaces, GUIs) according to an embodiment of this application.

As shown in FIG. 3(a), when detecting that a user sits on a seat in a driver area, a vehicle may capture an image by using a camera (for example, a camera of a driver monitoring system (driver monitoring system, DMS) or a cabin monitoring system (cabin monitoring system, CMS)) in a cabin. The image includes facial information of the user. The vehicle may determine, based on an eye position in the facial information, a height of a virtual image presented by a HUD. When an operation of pressing a brake pedal by the user is detected, a GUI shown in FIG. 3(b) may be displayed.

In an embodiment, detecting that the user sits on the seat in the driver area may also be understood as detecting that the user is in the driver area.

In an embodiment, capturing the image by using the camera in the cabin includes: capturing an image of the user by using the camera in the cabin, or capturing an image of the driver area by using the camera in the cabin.

In an embodiment, that the vehicle may capture the image by using the camera in the cabin, when detecting that the user sits on the seat in the driver area includes: when it is detected that the user sits on the seat in the driver area, the vehicle is currently in a parking gear (P gear), and a HUD function is enabled, capturing the image by using the camera in the cabin.

As shown in FIG. 3(b), when detecting the operation of pressing the brake pedal by the user, the vehicle may adjust the HUD based on the height that is of the virtual image presented by the HUD and that corresponds to the eye position. In addition, the vehicle may display an adjustment box 301 by using the HUD. The adjustment box 301 includes prompt information "Automatically matching the height".

The diagram of the structure of the W-HUD system shown in FIG. 2 is used as an example. Adjusting the HUD may include adjusting the first reflection component 230 and/or the second reflection component 240. For example, a reflection angle of the first reflection component 230 and/or a reflection angle of the second reflection component 240 may be adjusted, to adjust the height of the virtual image presented by the HUD.

Because pressing the brake pedal and engaging a gear before the vehicle travels are habitual operations of the user, in this embodiment of this application, adjustment of the HUD is combined with the habitual operations of the user. When it is detected that the user presses the brake pedal, the HUD is adjusted based on the eye position of the user, so that the HUD is adjusted in a user-unaware state. This reduces learning costs of the user in a process of adjusting the HUD, avoids a complex operation of the user in the process of adjusting the HUD, and helps improve user experience.

In an embodiment, that the vehicle may determine, based on the eye position in the facial information, the height of the virtual image presented by the HUD includes: determining, based on an eye position in the image captured within first preset duration, the height of the virtual image presented by the HUD. The first preset duration is preset duration before the operation of pressing the brake pedal by the user is detected.

In an embodiment, an end moment of the first preset duration is a moment at which the operation of pressing the brake pedal by the user is detected. Alternatively, an end moment of the first preset duration is a moment at which it is detected that an opening degree of the brake pedal is greater than or equal to a preset opening degree threshold.

For example, the first preset duration is 500 milliseconds (milliseconds, ms).

In this embodiment of this application, considering that the eye of the user may gaze at the gear when the user presses the brake pedal, the HUD may be adjusted based on the eye position determined based on the image obtained within a period of time before the operation of pressing the brake pedal by the user is detected. This can improve accuracy of the eye position of the user, and help improve accuracy of adjusting the HUD, so that the height of the virtual image presented by the HUD better conforms to a habit of the user.

In an embodiment, when detecting an operation of adjusting the gear from the P gear to another gear by the user, the vehicle may adjust the HUD based on the height that is of the virtual image presented by the HUD and that corresponds to the eye position.

In an embodiment, detecting the operation of adjusting the gear from the P gear to the another gear by the user includes detecting an operation of adjusting the gear from the P gear to a drive gear (D gear) by the user.

In an embodiment, when detecting another operation (for example, an operation of manipulating a lever, an operation of tapping for confirmation on a vehicle-mounted display, or a voice instruction) of the user, the vehicle may adjust the HUD based on the height that is of the virtual image presented by the HUD and that corresponds to the eye position.

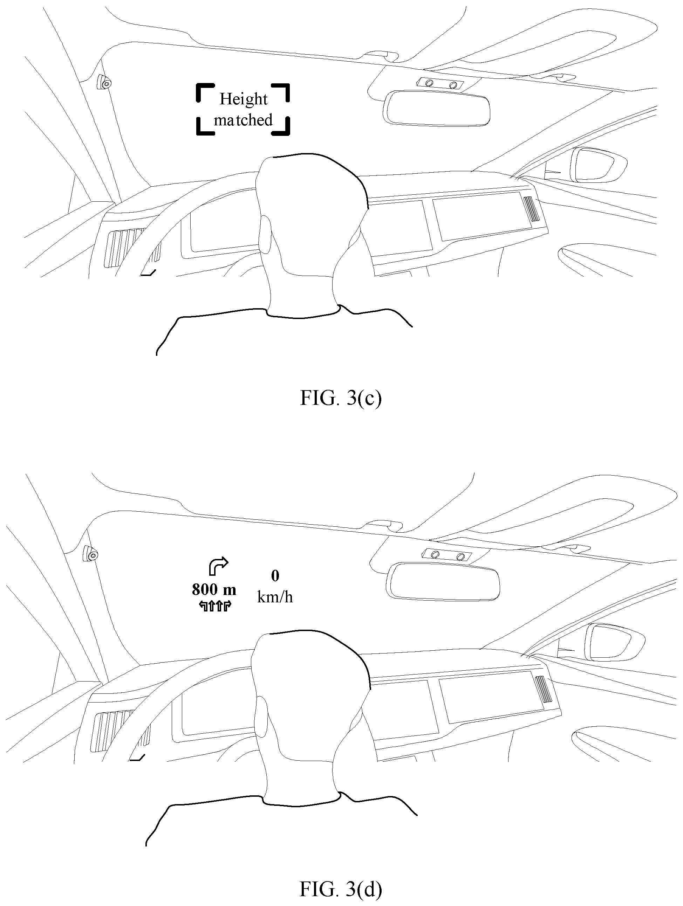

As shown in FIG. 3(c), after adjustment of the HUD is completed, prompt information "Height matched" may be displayed in the adjustment box 301.

As shown in FIG. 3(d), after the prompt information "Height matched" is displayed in the adjustment box 301, the vehicle may display navigation information at the height by using the HUD. For example, the navigation information indicates that a current vehicle speed is 0 km/h (km/h), and indicates to turn right after 800 meters forward.

In an embodiment, when detecting the operation of adjusting the gear from the P gear to the another gear by the user, the vehicle may stop obtaining the image by using the camera in the cabin, and then stop determining, based on the eye position of the user, the height of the virtual image presented by the HUD. In this way, a resource waste caused by constantly adjusting the HUD based on the eye position of the user can be avoided.

In an embodiment, when detecting the operation of pressing the brake pedal by the user, the vehicle may adjust the HUD based on the height that is of the virtual image presented by the HUD and that corresponds to the eye position. When adjustment of the HUD is completed based on an eye height, adjustment of the HUD may be stopped.

In this embodiment of this application, after the user gets on the vehicle, the vehicle may automatically adjust, in the user-unaware state to the height that conforms to the habit of the user (or within an optimal field of view of the user), the height of the virtual image presented by the HUD. In this way, the user does not need to manually adjust the height of the virtual image presented by the HUD, to help improve an automation degree of the vehicle and also help improve user experience.

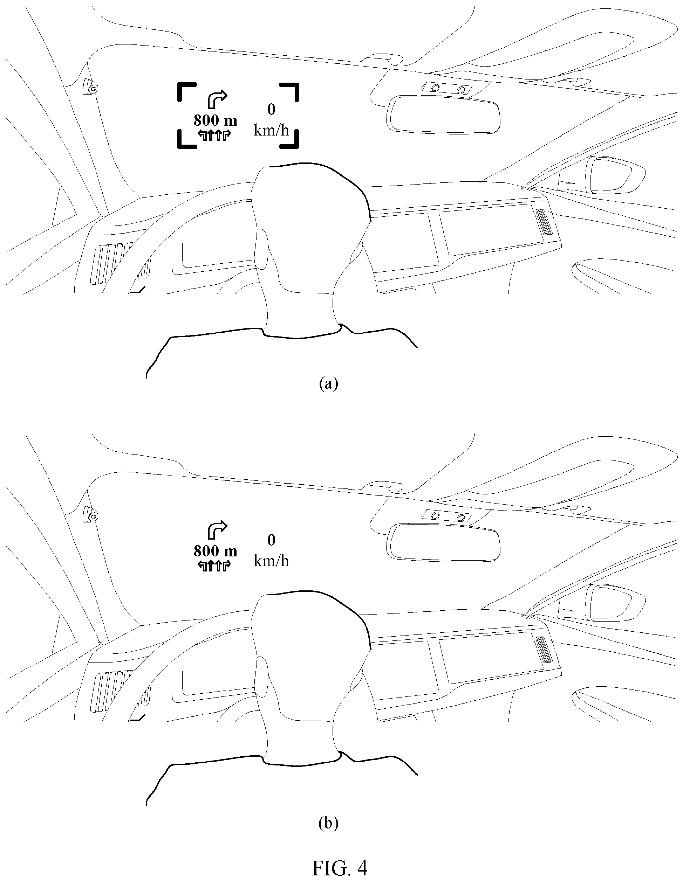

For example, FIG. 4 shows a group of graphical user interfaces GUIs according to an embodiment of this application. The GUIs shown in FIG. 4 are different from the GUIs shown in FIG. 3(a) to FIG. 3(d) in that when detecting an operation of pressing a brake pedal by a user, a vehicle may control a HUD to display a to-be-displayed image (for example, navigation information and instrument information) in an adjustment box 301. When adjustment of the HUD is completed, the adjustment box 301 may be automatically hidden.

As shown in (a) in FIG. 4, when detecting the operation of pressing the brake pedal by the user, the vehicle may adjust the HUD based on a height of a virtual image presented by the HUD. In addition, the vehicle may display the adjustment box 301 by using the HUD. The adjustment box 301 includes the navigation information.

As shown in (b) in FIG. 4, after adjustment of the HUD is completed, the vehicle may control the HUD to hide the adjustment box 301. When the adjustment box 301 disappears, the user may determine that the vehicle completes adjustment of the height of the virtual image presented by the HUD.

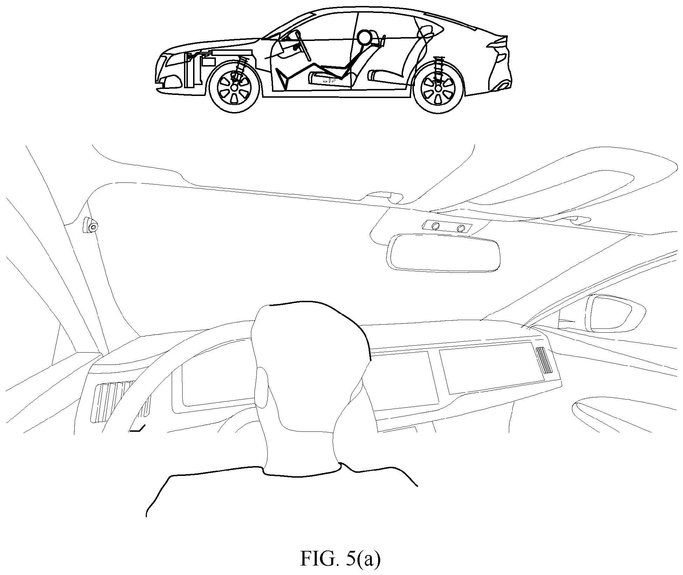

For example, FIG. 5(a) to FIG. 5(e) show a group of graphical user interfaces GUIs according to an embodiment of this application.

As shown in FIG. 5(a), when detecting that a user sits on a seat in a driver area and detecting no operation of adjusting the seat by the user, a vehicle may not capture an image by using a camera in a cabin.

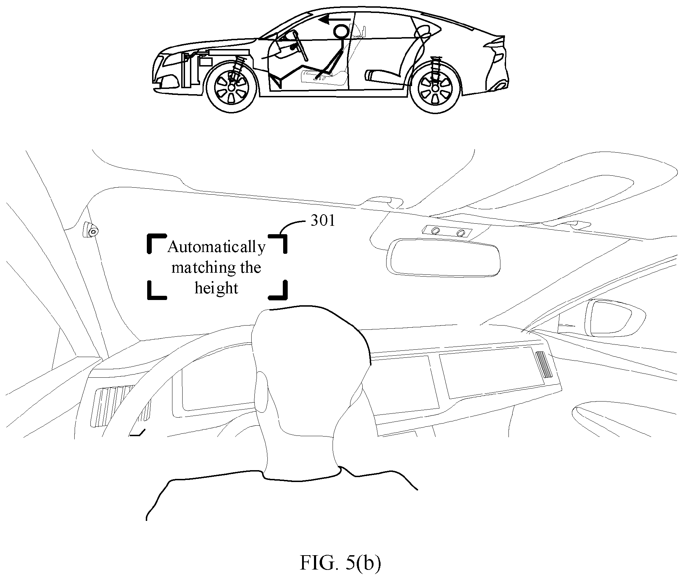

As shown in FIG. 5(b), when detecting an operation of adjusting the seat (for example, adjusting the seat forward) by the user, the vehicle may determine an eye position of the user in the driver area based on the image captured by the camera in the cabin. In a process in which the user adjusts the seat, the vehicle may further adjust, in real time based on a change of the eye position, a height of a virtual image presented by a HUD. In addition, the vehicle may further control the HUD to display a adjustment box 301. The adjustment box 301 includes prompt information "Automatically matching the height".

In an embodiment, that the vehicle may capture the image by using the camera in the cabin, when detecting the operation of adjusting the seat by the user includes: When it is detected that the user adjusts the seat in the driver area, the vehicle is currently in a P gear, and a HUD function is enabled, the vehicle may capture the image by using the camera in the cabin.

For example, at a moment T1 in the process in which the user adjusts the seat, it is determined, based on the image captured by the camera, that the eye position is a position 1, and a height that is of the virtual image presented by the HUD and that matches the position 1 is a height 1. The vehicle may adjust the HUD based on the height 1.

In an embodiment, the operation of adjusting the seat by the user includes adjusting a fore-aft position of the seat, adjusting a height of the seat, adjusting an angle of a seat backrest, or the like.

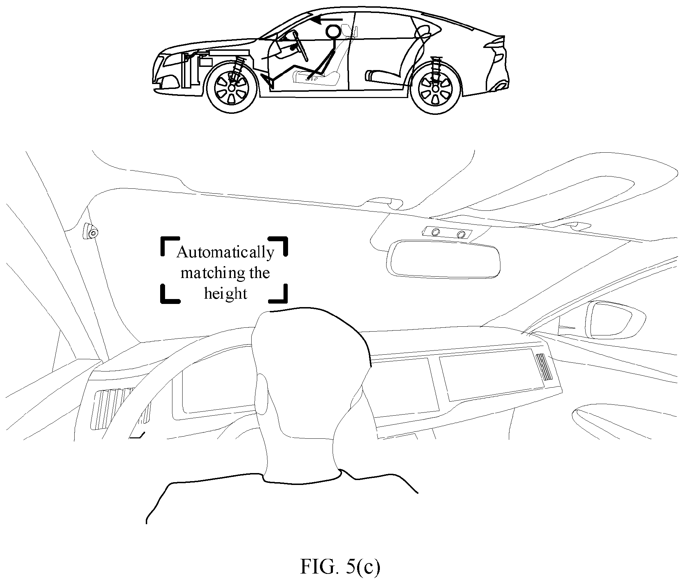

As shown in FIG. 5(c), in a process of detecting that the user continuously adjusts the seat (for example, further adjusts the seat forward), the vehicle may continue to obtain the eye position of the user in the driver area based on the image captured by the camera. In addition, the vehicle may further control the HUD to display the adjustment box 301. The adjustment box 301 includes the prompt information "Automatically matching the height".

For example, at a moment T₂ in the process in which the user adjusts the seat, it is determined, based on the image captured by the camera, that the eye position is a position 2, and a height that is of the virtual image presented by the HUD and that matches the position 2 is a height 2. The vehicle may adjust the HUD based on the height 2.

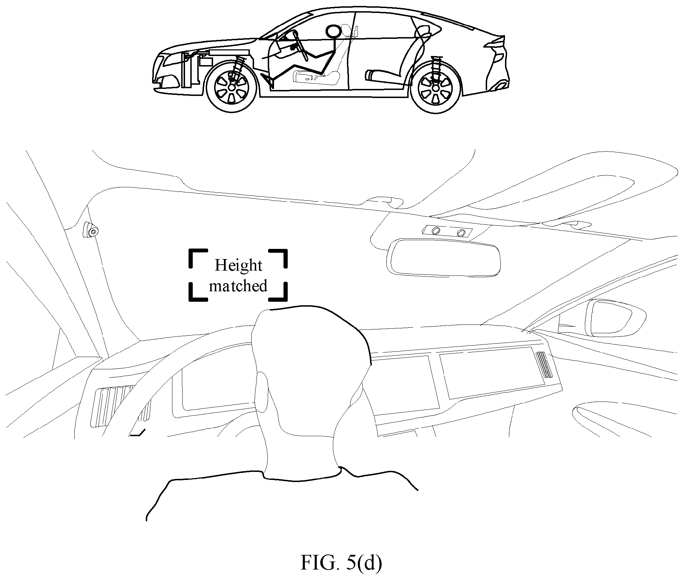

As shown in FIG. 5(d), when detecting that the user stops the operation of adjusting the seat, the vehicle may stop adjusting the HUD. In this case, an adjustment box may be displayed by using the HUD, and prompt information "Height matched" is displayed in the adjustment box. In this way, the user can learn that the vehicle completes adjustment of the HUD.

In an embodiment, within preset duration starting from detecting that the user stops the operation of adjusting the seat, the vehicle may continue to adjust the HUD based on a change of the eye position of the user. If no further operation of adjusting the seat by the user is detected within the preset duration starting from detecting that the user stops the operation of adjusting the seat, the vehicle may stop adjusting the HUD when the preset duration ends. For example, the preset duration is 1 second (second, s).

For example, because buttons for adjusting the fore-aft position and the height of the seat are different, there may be a specific time interval between adjusting the fore-aft position and the height of the seat by the user. The HUD may further continue to be adjusted within the preset duration starting from detecting that the user stops adjusting the seat. In this way, when there is the interval between adjusting the fore-aft position of the seat and the height of the seat, the HUD can be adjusted without interruption, so that the user can experience an uninterrupted process of adjusting the HUD in two processes of adjusting the seat with the interval, which helps improve user experience.

That the vehicle stops adjusting the HUD may also be understood as that the vehicle stops obtaining the image in the cabin by using the camera, or that the vehicle stops determining the eye position of the user in the driver area.

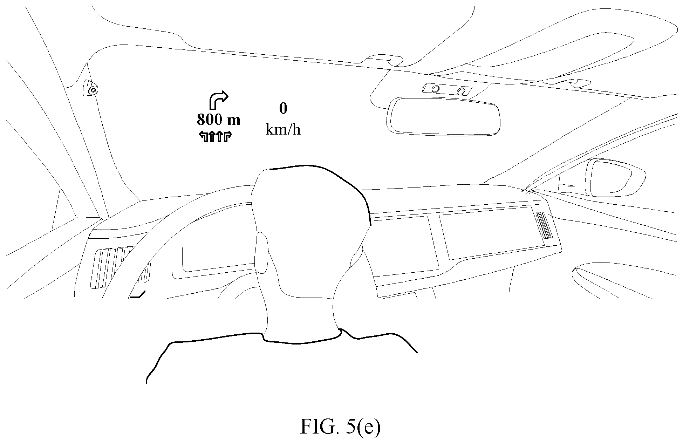

As shown in FIG. 5(e), after the prompt information "Height matched" is displayed in the adjustment box 301, the vehicle may display navigation information by using the HUD. For example, the navigation information indicates that a current vehicle speed is 0 km/h (km/h), and indicates to turn right after 800 meters forward.

In this embodiment of this application, in the process in which the user adjusts the seat, the vehicle may adjust, in real time based on the change of the eye position of the user, the height of the virtual image presented by the HUD. When feeling that the height of the virtual image presented by the HUD already meets a habit of the user, the user may stop adjusting the seat, so that the vehicle can stop adjusting the HUD. In this way, the process of adjusting the seat is combined with the process of adjusting the HUD, and the user can determine the height of the virtual image presented by the HUD, which helps improve user experience.

FIG. 5(a) to FIG. 5(e) are described by using an example in which the HUD is adjusted in real time based on the change of the eye position in the process in which the user adjusts the seat. Embodiments of this application are not limited thereto. For example, within preset duration starting from detecting that the user sits on the seat in the driver area and presses a brake pedal, the vehicle may adjust the HUD in real time based on the change of the eye position of the user. For example, when detecting an operation of pressing the brake pedal by the user, the vehicle may control the HUD to display countdown information (for example, 5-second countdown). In a countdown process, the user may adjust a sitting posture of the user and/or a seat posture. When the countdown ends, based on an eye position that is of the user and that exists when the countdown ends, the vehicle may adjust, to a height that matches the eye position, the height of the virtual image presented by the HUD. After the countdown ends, the user may further normally control the vehicle to travel through operations such as pressing the brake pedal and engaging a gear. In this way, adjustment of the HUD is combined with a habitual operation of the user, which reduces learning costs of the user in the process of adjusting the HUD, avoids a complex operation of the user in the process of adjusting the HUD, and helps improve user experience.

In FIG. 5(a) to FIG. 5(e), the operation of adjusting the seat by the user is detected, so that the HUD starts to be adjusted in real time. Embodiments of this application are not limited thereto.

For example, alternatively, when an operation of opening a vehicle door by the user is detected, the HUD may start to be adjusted in real time based on the eye position of the user. When a preset gesture (for example, an OK gesture) of the user is detected in the image captured by using the camera, adjustment of the HUD is stopped.

For another example, alternatively, when it is detected that the user sits on the seat, the HUD may start to be adjusted in real time based on the eye position of the user. When a preset gesture (for example, an OK gesture) of the user is detected in the image captured by using the camera, adjustment of the HUD is stopped.

In the GUIs shown in FIG. 5(a) to FIG. 5(e), when detecting that the user stops the operation of adjusting the seat, the vehicle may stop adjusting the HUD. Embodiments of this application are not limited thereto. For example, in consideration of the fact that the sitting posture of the user does not conform to the habit of the user when adjustment of the seat is stopped, time may be further reserved for the user to adjust the sitting posture. In a process in which the user adjusts the sitting posture, the vehicle may further continue to adjust the HUD in real time.

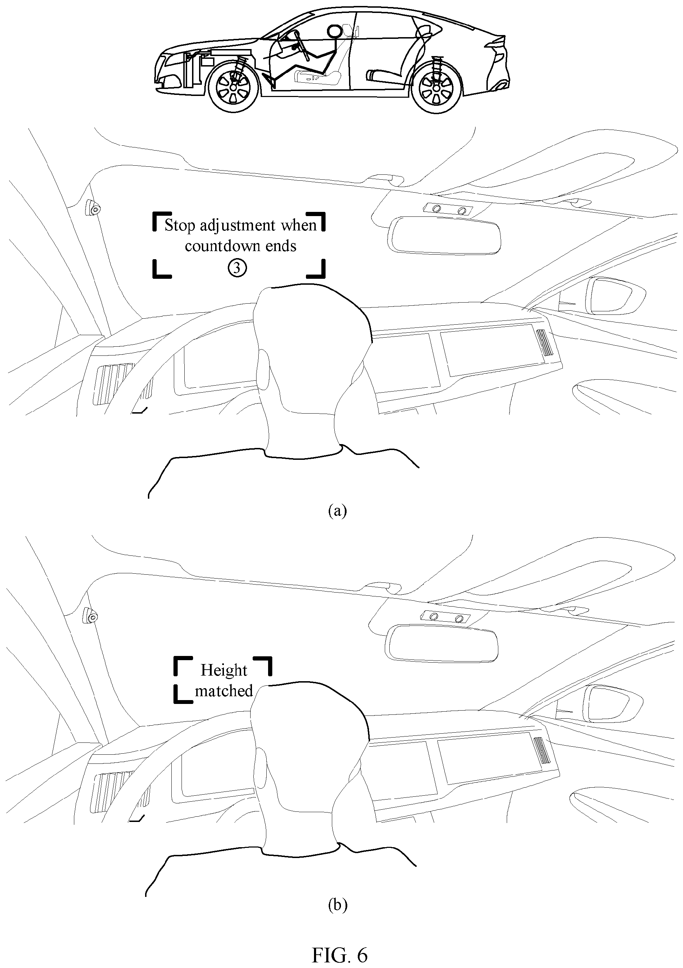

For example, FIG. 6 shows a group of graphical user interfaces GUIs according to an embodiment of this application.

As shown in (a) in FIG. 6, when detecting that a user stops an operation of adjusting a seat, a vehicle may display, by using a HUD, a adjustment box 301, prompt information "Stop adjustment when countdown ends", and countdown information.

For example, when detecting that the user stops the operation of adjusting the seat, the vehicle may reserve 3s for the user to adjust a sitting posture. In the 3 seconds, the vehicle may further determine a change of an eye position of the user based on an image captured by a camera, to adjust, in real time based on the change of the eye position, a height of a virtual image presented by the HUD.

As shown in (b) in FIG. 6, when 3s countdown ends, the vehicle may stop adjusting the HUD. In addition, the vehicle may display, by using the HUD, the adjustment box 301 and prompt information "Height matched".

In this embodiment of this application, after the user completes adjustment of the seat, a period of time may be reserved for the user to continue to adjust a sitting posture of the user. In a process in which the user adjusts the sitting posture, the vehicle may further adjust the HUD in real time based on a change of the eye position of the user. When the reserved time ends, the vehicle may stop adjusting the HUD. In this way, when both a seat posture and a body posture conform to a habit of the user, adjustment of the HUD is completed, which helps improve user experience.

In the GUIs shown in FIG. 6, an end moment of the countdown is used as a moment at which adjustment of the HUD is stopped. Embodiments of this application are not limited thereto. For example, alternatively, when an operation of pressing a brake pedal by the user is detected, adjustment of the HUD may be stopped. For another example, alternatively, when an operation of adjusting a gear from a P gear to another gear by the user is detected, adjustment of the HUD may be stopped.

In an embodiment, a length of the countdown may be set when the vehicle is delivered from a factory, or may be set by the user.

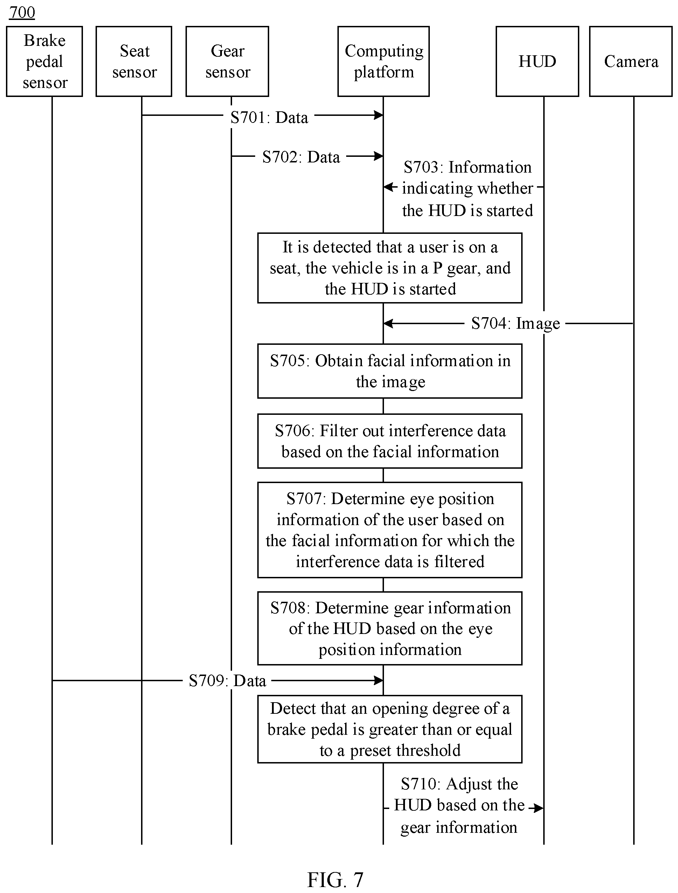

FIG. 7 is a schematic flowchart of an adjustment method 700 according to an embodiment of this application. As shown in FIG. 7, the method includes the following steps.

S701: A computing platform obtains data collected by a seat sensor of a first area.

For example, the first area may be a driver area or a front passenger area.

In an embodiment, the data collected by the seat sensor indicates whether a user sits on a seat, or the data collected by the seat sensor is used to determine whether a user is in the first area.

In an embodiment, the seat sensor may be a seat sensor in the driver area or a seat sensor in the front passenger area.

For example, the seat sensor may be a pressure sensor under the seat or a sensor that detects a seat belt status. For example, in a time period, the computing platform may determine, based on a change of a pressure value detected by the pressure sensor under the seat in the driver area, that the user sits on the seat in the driver area.

S702: The computing platform obtains data collected by a gear sensor.

In an embodiment, the data collected by the gear sensor indicates a current gear of the vehicle, for example, the vehicle is currently in a P gear.

S703: The computing platform obtains information indicating whether a HUD is started.

For example, when the user starts the HUD, the HUD may send, to the computing platform, information indicating that the HUD is started.

There is no actual sequence from S701 to S703.

S704: When it is detected that the user is on the seat, the vehicle is in the P gear, and the HUD is started, the computing platform may obtain an image captured by a camera in a cabin.

For example, when it is detected that the user is on the seat in the driver area, the vehicle is in the P gear, and the HUD is started, the computing platform may control a DMS in the cabin to capture the image. For example, the computing platform may control the DMS to capture an image of the driver area, or control the DMS to capture an image of the user.

S705: The computing platform obtains facial information in the image.

For example, the computing platform may obtain the facial information in the image based on an image segmentation algorithm.

S706: The computing platform filters out interference data based on the facial information.

For example, there may be some interference data in the image captured by the camera. For example, an image captured when the user looks down at a brake, changes shoes, looks at a left or right rearview mirror, or looks up at an interior rearview mirror is the interference data for adjusting the HUD, and may be filtered out.

S707: The computing platform determines eye position information of the user based on the facial information for which the interference data is filtered out.

For example, the computing platform may determine the eye position information of the user based on valid data (or data, other than the interference data, in the facial information) obtained within preset duration (for example, 3 seconds). The eye position information may be converted into coordinates in a same coordinate system as that of the HUD by using a conversion matrix, so that gear information that is of the HUD and that corresponds to the eye position information can be determined.

For example, the eye position information includes an eye position, a position of an area in which an eye is located, a gaze direction, or the like.

It should be understood that the gear information of the HUD may be a height of a virtual image presented by the HUD.

S708: The computing platform determines the gear information of the HUD based on the eye position information.

In an embodiment, the computing platform may determine the gear information of the HUD based on the eye position information and a mapping relationship between the eye position information and the gear information of the HUD.

For example, the eye position information may be an eye position, and the computing platform may determine the gear information of the HUD based on the eye position and a mapping relationship between the eye position and the gear information of the HUD.

S709: The computing platform obtains data collected by a brake pedal sensor.

In an embodiment, the data collected by the brake pedal sensor indicates an opening degree of a brake pedal.

S710: When the opening degree of the brake pedal is greater than or equal to a preset threshold, the computing platform may adjust the HUD based on the gear information of the HUD.

In an embodiment, duration from detecting that the user sits on the seat to detecting that the opening degree of the brake pedal is greater than or equal to the preset threshold is △t. Within △t, the computing platform may determine the eye position information of the user based on the valid data in the facial information. For example, within △t, N pieces of eye position information are obtained based on the valid data in the facial information. The finally obtained eye position information of the user may be obtained by performing weighted averaging on the N pieces of eye position information. In this way, the computing platform may adjust the HUD based on the finally obtained eye position information.

In an embodiment, if a moment at which it is detected that the opening degree of the brake pedal is greater than or equal to the preset threshold or a moment at which it is detected that the user presses the brake pedal is a moment t₁, the computing platform may obtain facial information that exists within preset duration (for example, 500 ms) before the moment t₁, and determine final eye position information of the user based on the facial information that exists within the preset duration. For example, if facial information that exists within 500 ms before the moment t₁ does not include the interference data, the computing platform may determine the eye position information of the user based on the facial information that exists within the 500 ms.

In an embodiment, an end moment of the preset duration is the moment t₁, or the end moment of the preset duration is a moment t₂. The moment t₂ is a moment before the moment t₁.

In an embodiment, when the opening degree of the brake pedal is greater than or equal to the preset threshold, the computing platform may further control the HUD to display prompt information. The prompt information is used to prompt the user that the HUD is being adjusted.

In an embodiment, when the computing platform completes adjustment of the HUD, the prompt information may be automatically hidden. Alternatively, when completing adjustment of the HUD, the computing platform may control the HUD to display a to-be-displayed image, for example, navigation information or instrument information.

In this embodiment of this application, after the user gets on the vehicle, the vehicle may automatically adjust, in a user-unaware state to a height that conforms to a habit of the user, the height of the image presented by the HUD. In this way, the user does not need to manually adjust the height of the image presented by the HUD, to help improve an automation degree of the vehicle and also help improve user experience.

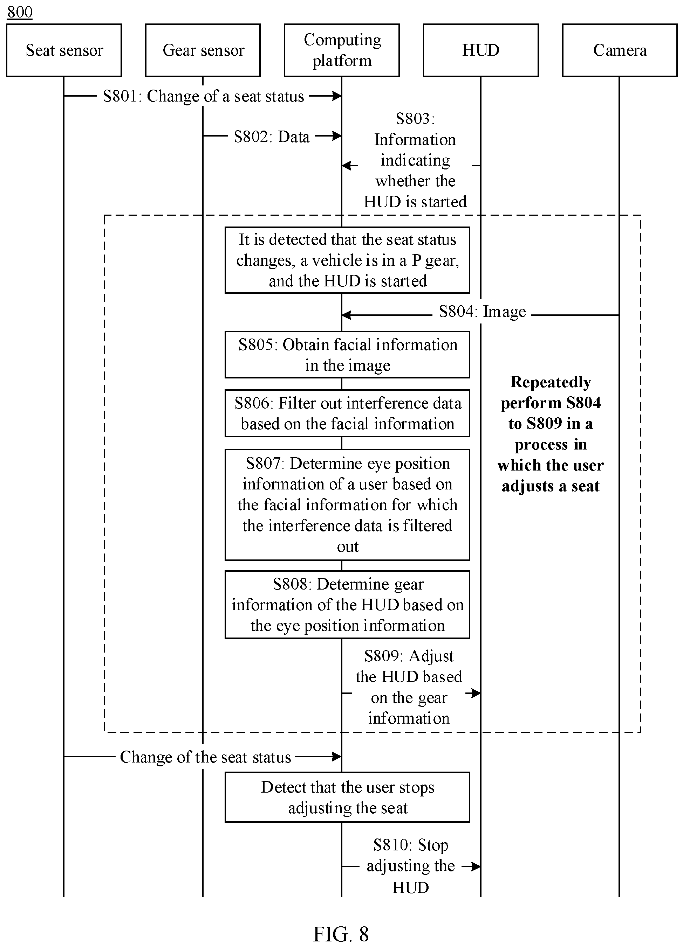

FIG. 8 is a schematic flowchart of an adjustment method 800 according to an embodiment of this application. As shown in FIG. 8, the method includes the following steps.

S801: A computing platform obtains a change of a seat status.

In an embodiment, the change of the seat status indicates a change of a height of a seat, a change of an angle of a seat backrest, or a change of a fore-aft position of the seat.

S802: The computing platform obtains data collected by a gear sensor.

S803: The computing platform obtains information indicating whether a HUD is started.

For S802 and S803, refer to the descriptions of S702 and S703. Details are not described herein again.

S804: When it is detected that the seat status changes, a vehicle is in a P gear, and the HUD is started, the computing platform may obtain an image captured by a camera in a cabin.

In an embodiment, detecting that the seat status changes includes: detecting one or more of the following: The height of the seat changes, the angle of the seat backrest changes, or the fore-aft position of the seat changes.

S805: The computing platform obtains facial information in the image.

S806: The computing platform filters out interference data based on the facial information.

S807: The computing platform determines eye position information of a user based on the facial information for which the interference data is filtered out.

S808: The computing platform determines gear information of the HUD based on the eye position information.

For processes of S805 to S808, refer to the processes of S705 to S708. Details are not described herein again.

S809: The computing platform adjusts the HUD based on the gear information of the HUD.

The computing platform may repeatedly perform S804 to S809 in a process of detecting that the user adjusts the seat, so that the HUD can be adjusted in real time based on a change of the eye position information in different seat statuses.

In an embodiment, when it is detected that the seat status changes, the vehicle is in the P gear, and the HUD is started, the computing platform may periodically obtain the image captured by the camera.

For example, in a first period, the computing platform may determine, based on facial information in an image obtained in the period, that an eye position of the user is a position 1, so that the computing platform can adjust, to a height 1 based on the position 1, a height of a virtual image presented by the HUD. There is a correspondence between the position 1 and the height 1.

For another example, in a second period, the computing platform may determine, based on facial information in an image obtained in the period, that the eye position of the user is a position 2, so that the computing platform can adjust, to a height 2 based on the position 2, the height of the virtual image presented by the HUD. There is a correspondence between the position 2 and the height 2. By analogy, the computing platform may adjust the HUD in real time in different periods.

In an embodiment, in a process of adjusting the HUD in real time, the computing platform may further control the HUD to display prompt information. The prompt information is used to prompt the user that the HUD is being adjusted.

S810: When detecting that the user stops adjusting the seat, the computing platform may stop adjusting the HUD.

In an embodiment, within preset duration starting from detecting that the user stops adjusting the seat, the computing platform may further continue to adjust the HUD in real time based on a change of the eye position information. When the preset duration ends, the computing platform may stop adjusting the HUD.

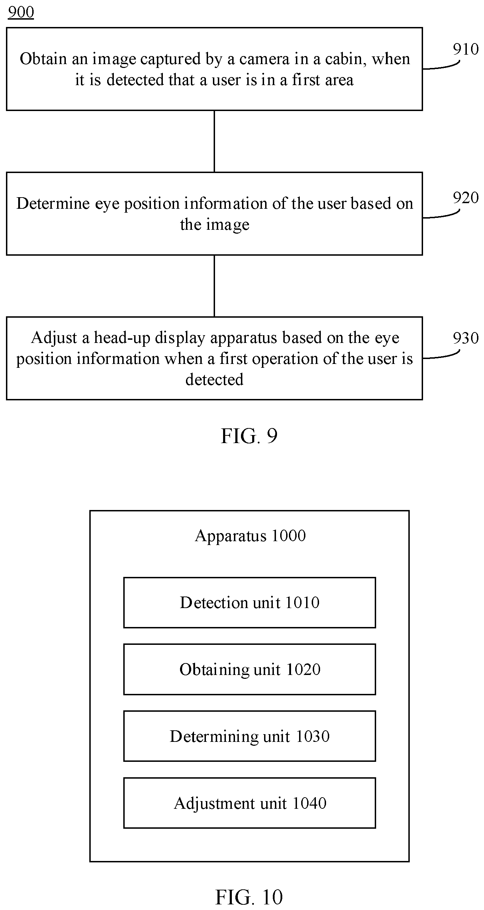

FIG. 9 is a schematic flowchart of an adjustment method 900 according to an embodiment of this application. The method 900 may be performed by a carrier (for example, a vehicle), or the method 900 may be performed by the foregoing computing platform, or the method 900 may be performed by a system including the computing platform and a head-up display apparatus, or the method 900 may be performed by a system-on-a-chip (system-on-a-chip, SOC) in the computing platform, or the method 900 may be performed by a processor in the computing platform. The method 900 may be applied to a cabin of the carrier. The cabin includes a first area. A head-up display apparatus is disposed in the cabin. The head-up display apparatus is configured to display information to a user in the first area. The method 900 includes:

S910: Obtain an image captured by a camera in the cabin, when it is detected that the user is in the first area.

Optionally, the obtaining an image captured by a camera in the cabin, when it is detected that the user is in the first area includes: obtaining the image captured by the camera in the cabin, when it is detected that the user is in the first area, a vehicle is in a parking gear, and the head-up display apparatus is started.

For example, the carrier is a vehicle, and the first area may be a driver area in the vehicle. The image may be obtained when it is detected that the user is in the driver area, the vehicle is in the parking gear, and the head-up display apparatus is started.

In an embodiment, the obtaining an image captured by a camera in the cabin includes: obtaining an image of the user, or obtaining an image including the entire first area, or obtaining an image including a part of the first area.

In some possible implementations, detecting that the user is in the first area includes: detecting a change from no user presence to user presence in the first area.

Optionally, the obtaining an image captured by a camera in the cabin, when it is detected that the user is in the first area includes: obtaining the image captured by the camera in the cabin, when it is detected that the user in the first area adjusts a seat, a vehicle is in a parking gear, and the head-up display apparatus is started.

For example, the carrier is a vehicle, and the first area may be a driver area in the vehicle. The image may be obtained when an operation of adjusting the seat by the user in the driver area is detected, the vehicle is in the parking gear, and the head-up display apparatus is started.

Optionally, the camera is a camera of a DMS or a CMS.

S920: Determine eye position information of the user based on the image.

For example, the eye position information of the user may be obtained from the image based on an image segmentation algorithm. The eye position information may be converted into coordinates in a same coordinate system as that of a HUD by using a conversion matrix, so that a height that is of a virtual image presented by the HUD and that corresponds to the eye position information can be determined.

Optionally, the eye position information may be one or more pieces of eye position information.

For example, the eye position information may be one piece of eye position information determined based on an image obtained at a moment, or may be one piece of eye position information determined based on an image obtained in a time period, or may be a plurality of pieces of eye position information determined based on an image obtained in a time period.

For another example, when the eye position information is one piece of eye position information, the head-up display apparatus may be adjusted based on the piece of eye position information. Alternatively, when the eye position information is a plurality of pieces of eye position information, the head-up display apparatus may be adjusted based on the plurality of pieces of eye position information.

S910 and S920 are described by using an example in which the image is captured by using the camera in the cabin and the eye position information is determined based on the image. Embodiments of this application are not limited thereto. For example, the eye position information of the user may be further determined based on data collected by another sensor in the cabin. For example, the eye position information of the user may be determined based on point cloud data collected by a lidar in the cabin. For another example, the eye position information of the user is determined based on point cloud data collected by a millimeter-wave radar in the cabin.

S930: Adjust the head-up display apparatus based on the eye position information when a first operation of the user is detected.

Optionally, the adjusting the head-up display apparatus based on the eye position information when a first operation of the user is detected includes: adjusting the head-up display apparatus based on the eye position information when an operation of pressing a brake pedal by the user is detected.

For example, as shown in FIG. 3(a) and FIG. 3(b), when detecting the operation of pressing the brake pedal by the user, the vehicle may adjust the HUD based on an eye position of the user.

Optionally, the adjusting the head-up display apparatus based on the eye position information when a first operation of the user is detected includes: adjusting the head-up display apparatus based on the eye position information when an operation of adjusting a gear from the parking gear to another gear by the user is detected.

Optionally, the adjusting the head-up display apparatus based on the eye position information when an operation of adjusting a gear from the parking gear to another gear by the user is detected includes: adjusting the head-up display apparatus based on the eye position information when an operation of adjusting the gear from the parking gear to a drive gear by the user is detected.

Optionally, the determining eye position information of the user based on the image includes: determining the eye position information based on the image obtained within first preset duration, where an end moment of the first preset duration is a moment at which the first operation is detected.

Optionally, the determining eye position information of the user based on the image includes: determining the eye position information based on an image obtained when the operation of pressing the brake pedal by the user is detected.

Optionally, the method 900 further includes: when the first operation of the user is detected, controlling the head-up display apparatus to display prompt information, where the prompt information is used to prompt the user that the head-up display apparatus is being adjusted.

For example, as shown in FIG. 3(b), when the operation of pressing the brake pedal by the user is detected, the head-up display apparatus may be controlled to display an adjustment box 301. Information "Automatically matching the height" is displayed in the adjustment box 301. After seeing the adjustment box 301 and the information in the adjustment box 301, the user may learn that the vehicle is currently automatically adjusting the HUD.

For example, as shown in (a) in FIG. 4, when the operation of pressing the brake pedal by the user is detected, the head-up display apparatus may be controlled to display the adjustment box 301. Navigation information is displayed in the adjustment box 301. After seeing the adjustment box 301, the user may learn that the vehicle is currently automatically adjusting the HUD.

Optionally, the method 900 further includes: when adjustment of the head-up display apparatus is completed, stopping obtaining the image.

The stopping obtaining the image may also be understood as stopping obtaining the image of the user, or may be understood as stopping obtaining the image of the first area, or may be understood as stopping adjusting the HUD.

Optionally, the obtaining an image captured by a camera in the cabin, when it is detected that the user is in the first area includes: obtaining the image captured by the camera, when it is detected that the user is in the first area and the operation of adjusting the seat in the first area by the user is detected. The adjusting the head-up display apparatus based on the eye position information when a first operation of the user is detected includes: in a process of detecting that the user adjusts the seat, adjusting the head-up display apparatus based on a change of the eye position information.

For example, as shown in FIG. 5(b) and FIG. 5(c), in a process of detecting that the user adjusts a position of the seat forward, the vehicle may adjust the HUD in real time based on a change of the eye position.

Adjusting the HUD in real time may also be understood as adjusting, in a process of adjusting the seat, the HUD based on the eye position information determined at different moments, or adjusting, in a process of adjusting the seat, the HUD based on the change of eye position information.

For example, the eye position information is an eye position. At a moment T₁ in the process of detecting that the user adjusts the seat, it is determined, based on facial information in the obtained image, that the eye position of the user is a position 1, so that the height of the virtual image presented by the HUD may be adjusted to a height 1 based on the position 1. There is a correspondence between the position 1 and the height 1. For another example, at a moment T₂ in the process of detecting that the user adjusts the seat, it is determined, based on the facial information in the obtained image, that the eye position of the user is a position 2, so that the height of the virtual image presented by the HUD may be adjusted to a height 2 based on the position 2. There is a correspondence between the position 2 and the height 2.

Optionally, the method 900 further includes: in the process of detecting that the user adjusts the seat, controlling the head-up display apparatus to display the prompt information, where the prompt information is used to prompt the user that the head-up display apparatus is being adjusted.

For example, as shown in FIG. 5(b) and FIG. 5(c), in the process of adjusting the seat, the user may control the HUD to display the adjustment box 301. The adjustment box 301 includes the information "Automatically matching the height". After seeing the adjustment box 301, the user may learn that the vehicle is currently automatically adjusting the HUD.

Optionally, the method 900 further includes: when it is detected that the user stops the operation of adjusting the seat, stopping adjusting the head-up display apparatus.

Stopping adjusting the head-up display apparatus may also be understood as stopping obtaining the image, or may be understood as stopping obtaining the image of the user, or may be understood as stopping obtaining the image of the first area.

Optionally, the method 900 further includes: within second preset duration starting from detecting that the user stops the operation of adjusting the seat, adjusting the head-up display apparatus based on a change of the eye position information.

For example, as shown in (a) in FIG. 6, within 3s starting from detecting that the user stops the operation of adjusting the seat, the vehicle may further adjust the head-up display apparatus based on a change of the eye position of the user. During the 3s, the user may further adjust a sitting posture of the user, so that the height of the virtual image presented by the HUD finally meets a habit of the user.

Optionally, the method 900 further includes: when the second preset duration ends, stopping adjusting the head-up display apparatus.

For example, as shown in (b) in FIG. 6, when it is detected that 3s countdown ends, adjustment of the HUD may be stopped. The vehicle may adjust the HUD based on a final eye position, to be specific, an eye position of the user at an end moment of the 3s countdown. Adjustment of the HUD is stopped after adjustment is completed, or capture of the image is stopped after adjustment is completed.

Optionally, the determining eye position information of the user based on the image includes: filtering out interference data in the image; and determining the eye position information based on the image in which the interference data is filtered out.

Optionally, the interference data includes but is not limited to an image captured when the user looks down at a brake, changes shoes, looks at a left or right rearview mirror, or looks up at an interior rearview mirror.

Optionally, the adjusting the head-up display apparatus based on the eye position information includes: determining, based on the eye position information, the height of the virtual image presented by the head-up display apparatus; and adjusting the head-up display apparatus based on the height.

Optionally, the carrier is a vehicle, and the first area includes a driver area or a front passenger area.

An embodiment of this application further provides an apparatus for implementing any one of the foregoing methods. For example, the apparatus is provided and includes units (or means) configured to implement the steps performed by the carrier (for example, a vehicle), the computing platform in the vehicle, the SOC in the computing platform, or the processor in the computing platform in any one of the foregoing methods.

FIG. 10 is a block diagram of an adjustment apparatus 1000 according to an embodiment of this application. The apparatus 1000 is configured to adjust a head-up display apparatus in a cabin of a carrier. The cabin includes a first area. The head-up display apparatus is configured to display information to a user in the first area. As shown in FIG. 10, the apparatus 1000 includes: a detection unit 1010, configured to detect whether the user is in the first area; an obtaining unit 1020, configured to: obtain an image captured by a camera in the cabin, when the detection unit 1010 detects that the user is in the first area; a determining unit 1030, configured to determine eye position information of the user based on the image; and an adjustment unit 1040, configured to adjust the head-up display apparatus based on the eye position information when the detection unit 1010 detects a first operation of the user.

Optionally, the adjustment unit 1040 is configured to adjust the head-up display apparatus based on the eye position information when the detection unit 1010 detects an operation of pressing a brake pedal by the user.

Optionally, the adjustment unit 1040 is configured to adjust the head-up display apparatus based on the eye position information when the detection unit 1010 detects an operation of adjusting a gear from a parking gear to another gear by the user.

Optionally, the determining unit 1030 is configured to determine the eye position information based on the image obtained by the obtaining unit 1020 within first preset duration, where an end moment of the first preset duration is a moment at which the first operation is detected.

Optionally, the apparatus 1000 further includes a control unit, configured to: when the detection unit 1010 detects the first operation of the user, control the head-up display apparatus to display prompt information, where the prompt information is used to prompt the user that the head-up display apparatus is being adjusted.

Optionally, the obtaining unit 1020 is further configured to: when adjustment of the head-up display apparatus is completed, stop obtaining the image.

Optionally, the obtaining unit 1020 is configured to: obtain the image captured by the camera, when the detection unit 1010 detects that the user is in the first area and detects an operation of adjusting a seat in the first area by the user; and the adjustment unit 1040 is configured to: in a process in which the detection unit 1010 detects that the user adjusts the seat, adjust the head-up display apparatus based on a change of the eye position information.

Optionally, the apparatus 1000 further includes a control unit, configured to: in the process in which the detection unit 1010 detects that the user adjusts the seat, control the head-up display apparatus to display prompt information, where the prompt information is used to prompt the user that the head-up display apparatus is being adjusted.

Optionally, the adjustment unit 1040 is further configured to: when the detection unit 1010 detects that the user stops the operation of adjusting the seat, stop adjusting the head-up display apparatus.

Optionally, the adjustment unit 1040 is further configured to: within second preset duration starting from detecting, by the detection unit 1010, that the user stops the operation of adjusting the seat, adjust the head-up display apparatus based on a change of the eye position information.

Optionally, the adjustment unit 1040 is further configured to: when the second preset duration ends, stop adjusting the head-up display apparatus.

Optionally, the determining unit 1030 is configured to: filter out interference data in the image; and determine the eye position information based on the image in which the interference data is filtered out.

Optionally, the determining unit 1030 is further configured to determine, based on the eye position information, a height of a virtual image presented by the head-up display apparatus; and the adjustment unit 1040 is configured to adjust the head-up display apparatus based on the height.

Optionally, the carrier is a vehicle, and the first area includes a driver area or a front passenger area.

For example, the detection unit 1010 may be the computing platform in FIG. 1, or a processing circuit, a processor, or a controller in the computing platform. For example, the detection unit 1010 is the processor 151 in the computing platform. The processor 151 may obtain a pressure value collected by a pressure sensor under the seat in the first area, to determine, based on a change of the pressure value, whether the user is in the first area.

For another example, the obtaining unit 1020 may be the computing platform in FIG. 1, or a processing circuit, a processor, or a controller in the computing platform. For example, the obtaining unit 1020 is a processor 152 in the computing platform. When the processor 151 determines that the user is in the first area, the processor 152 may control the camera in the cabin to start, and obtain the image captured by the camera.

For another example, the determining unit 1030 may be the computing platform in FIG. 1, or a processing circuit, a processor, or a controller in the computing platform. For example, the determining unit 1030 is a processor 153 in the computing platform. The processor 153 may obtain the image sent by the processor 152, and determine the eye position information of the user based on an image segmentation algorithm.

Optionally, the functions implemented by the obtaining unit 1020 and the determining unit 1030 may be implemented by a same processor.

For another example, the adjustment unit 1040 may be the computing platform in FIG. 1, or a processing circuit, a processor, or a controller in the computing platform. For example, the adjustment unit 1040 is the processor 15n in the computing platform. The processor 15n may adjust, based on the eye position information determined by the processor 153, the first reflection component 230 and/or the second reflection component 240 shown in FIG. 2, to adjust a height of a virtual image presented by a HUD.

The functions implemented by the detection unit 1010, the functions implemented by the obtaining unit 1020, the functions implemented by the determining unit 1030, and the functions implemented by the adjustment unit 1040 may be implemented by different processors, or some functions may be implemented by a same processor, or all the functions may be implemented by a same processor. This is not limited in embodiments of this application.

It should be understood that division of the units in the apparatus is merely logical function division. During actual implementation, all or some of the units may be integrated into one physical entity or may be physically separated. In addition, the unit in the apparatus may be implemented in a form of software invoked by the processor. For example, the apparatus includes the processor, the processor is connected to a memory, the memory stores instructions, and the processor invokes the instructions stored in the memory, to implement any one of the foregoing methods or implement the functions of the units in the apparatus. The processor is, for example, a general-purpose processor, such as a CPU or a microprocessor, and the memory is a memory inside the apparatus or a memory outside the apparatus. Alternatively, the unit in the apparatus may be implemented in a form of hardware circuit. The functions of some or all of the units may be implemented through design of the hardware circuit. The hardware circuit may be understood as one or more processors. For example, in an implementation, the hardware circuit is an ASIC, and the functions of some or all of the units are implemented through design of a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the units. All the units of the apparatus may be implemented in the form of software invoked by the processor, or may be implemented in the form of hardware circuit, or some of the units are implemented in the form of software invoked by the processor, and remaining units are implemented in the form of hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function based on a logical relationship of the hardware circuit, and the logical relationship of the hardware circuit is fixed or reconfigurable. For example, the processor is an ASIC or a hardware circuit, for example, an FPGA, implemented by using a PLD. In the reconfigurable hardware circuit, a process in which the processor loads a configuration document to implement hardware circuit configuration may be understood as a process in which the processor loads instructions to implement the functions of some or all of the units. In addition, the processor may be a hardware circuit designed for artificial intelligence. The hardware circuit designed for artificial intelligence may be understood as an ASIC, for example, an NPU, a TPU, or a DPU.

It can be learned that the units in the apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

Specifically, in addition, all or some of the units of the apparatus may be integrated, or may be implemented independently. In an implementation, these units are integrated together and implemented in a form of SOC. The SOC may include at least one processor configured to implement any one of the methods or implement the functions of the units of the apparatus. Types of the at least one processor may be different and, for example, include a CPU and an FPGA, a CPU and an artificial intelligence processor, a CPU and a GPU, or the like.

An embodiment of this application further provides an apparatus. The apparatus includes a processing unit and a storage unit. The storage unit is configured to store instructions, and the processing unit executes the instructions stored in the storage unit, to enable the apparatus to perform the methods or steps performed in the foregoing embodiments.

Optionally, if the apparatus is located in a vehicle, the processing unit may be the processors 151 to 15n shown in FIG. 1.

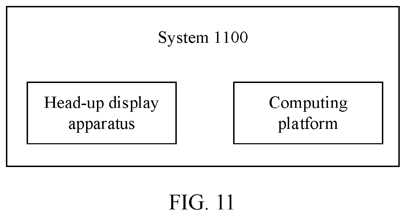

FIG. 11 is a block diagram of an adjustment system 1100 according to an embodiment of this application. As shown in FIG. 11, the adjustment system 1100 includes a head-up display apparatus and a computing platform. The computing platform may include the adjustment apparatus 1000.

An embodiment of this application further provides a carrier. The carrier may include the adjustment apparatus 1000 or the adjustment system 1100.

Optionally, the carrier may be a vehicle.

An embodiment of this application further provides a computer program product. The computer program product includes computer program code. When the computer program code is run on a computer, the computer is enabled to perform the foregoing methods.

An embodiment of this application further provides a computer-readable medium. The computer-readable medium stores program code. When the computer program code is run on a computer, the computer is enabled to perform the foregoing methods.

In an implementation process, steps in the foregoing methods may be implemented by using an integrated logic circuit of hardware in a processor or instructions in a form of software. The steps of the methods disclosed with reference to embodiments of this application may be directly performed by a hardware processor, or may be performed by a combination of the hardware in the processor and a software module. The software module may be located in a mature storage medium in the art such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

It should be further understood in embodiments of this application, sequence numbers of the foregoing processes do not mean execution sequences. The execution sequences of the processes should be determined based on functions and internal logic of the processes, and should not be constructed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions in this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An adjustment method, applied to a cabin of a carrier, wherein the cabin comprises a first area, a head-up display apparatus is disposed in the cabin, the head-up display apparatus is configured to display information to a user in the first area, and the method comprises:
obtaining an image captured by a camera in the cabin, when it is detected that the user is in the first area;
determining eye position information of the user based on the image; and
adjusting the head-up display apparatus based on the eye position information when a first operation of the user is detected.

2. The method according to claim 1, wherein the adjusting the head-up display apparatus based on the eye position information when a first operation of the user is detected comprises:
adjusting the head-up display apparatus based on the eye position information when an operation of pressing a brake pedal by the user is detected.

3. The method according to claim 1, wherein the adjusting the head-up display apparatus based on the eye position information when a first operation of the user is detected comprises:
adjusting the head-up display apparatus based on the eye position information when an operation of adjusting a gear from a parking gear to another gear by the user is detected.

4. The method according to any one of claims 1 to 3, wherein the determining eye position information of the user based on the image comprises:
determining the eye position information based on the image obtained within first preset duration, wherein an end moment of the first preset duration is a moment at which the first operation is detected.

5. The method according to any one of claims 1 to 4, wherein the method further comprises:
when the first operation of the user is detected, controlling the head-up display apparatus to display prompt information, wherein the prompt information is used to prompt the user that the head-up display apparatus is being adjusted.

6. The method according to any one of claims 1 to 5, wherein the method further comprises:
when adjustment of the head-up display apparatus is completed, stopping obtaining the image.

7. The method according to claim 1, wherein the obtaining an image captured by a camera in the cabin, when it is detected that the user is in the first area comprises:
obtaining the image when it is detected that the user is in the first area and an operation of adjusting a seat in the first area by the user is detected; and
the adjusting the head-up display apparatus based on the eye position information when a first operation of the user is detected comprises:
in a process of detecting that the user adjusts the seat, adjusting the head-up display apparatus based on a change of the eye position information.

8. The method according to claim 7, wherein the method further comprises:
in the process of detecting that the user adjusts the seat, controlling the head-up display apparatus to display prompt information, wherein the prompt information is used to prompt the user that the head-up display apparatus is being adjusted.

9. The method according to claim 7 or 8, wherein the method further comprises:
when it is detected that the user stops the operation of adjusting the seat, stopping adjusting the head-up display apparatus.

10. The method according to claim 7 or 8, wherein the method further comprises:
within second preset duration starting from detecting that the user stops the operation of adjusting the seat, adjusting the head-up display apparatus based on a change of the eye position information.

11. The method according to claim 10, wherein the method further comprises:
when the second preset duration ends, stopping adjusting the head-up display apparatus.

12. The method according to any one of claims 1 to 11, wherein the determining eye position information of the user based on the image comprises:
filtering out interference data in the image; and
determining the eye position information based on the image in which the interference data is filtered out.

13. The method according to any one of claims 1 to 12, wherein the adjusting the head-up display apparatus based on the eye position information comprises:
determining, based on the eye position information, a height of a virtual image presented by the head-up display apparatus; and
adjusting the head-up display apparatus based on the height.

14. The method according to any one of claims 1 to 13, wherein the carrier is a vehicle, and the first area comprises a driver area or a front passenger area.

15. An adjustment apparatus, wherein the apparatus is configured to adjust a head-up display apparatus in a cabin of a carrier, the cabin comprises a first area, the head-up display apparatus is configured to display information to a user in the first area, and the apparatus comprises:
a detection unit, configured to detect whether the user is in the first area;
an obtaining unit, configured to obtain an image captured by a camera in the cabin, when the detection unit detects that the user is in the first area;
a determining unit, configured to determine eye position information of the user based on the image; and
an adjustment unit, configured to adjust the head-up display apparatus based on the eye position information when the detection unit detects a first operation of the user.

16. The apparatus according to claim 15, wherein the adjustment unit is configured to:
adjust the head-up display apparatus based on the eye position information when the detection unit detects an operation of pressing a brake pedal by the user.

17. The apparatus according to claim 15, wherein the adjustment unit is configured to:
adjust the head-up display apparatus based on the eye position information when the detection unit detects an operation of adjusting a gear from a parking gear to another gear by the user.

18. The apparatus according to any one of claims 15 to 17, wherein the determining unit is configured to:
determine the eye position information based on the image obtained by the obtaining unit within first preset duration, wherein an end moment of the first preset duration is a moment at which the first operation is detected.

19. The apparatus according to any one of claims 15 to 18, wherein the apparatus further comprises:
a control unit, configured to: when the detection unit detects the first operation of the user, control the head-up display apparatus to display prompt information, wherein the prompt information is used to prompt the user that the head-up display apparatus is being adjusted.

20. The apparatus according to any one of claims 15 to 19, wherein the obtaining unit is further configured to:
when adjustment of the head-up display apparatus is completed, stop obtaining the image.

21. The apparatus according to claim 15, wherein the obtaining unit is configured to:
obtain the image captured by the camera, when the detection unit detects that the user is in the first area and detects an operation of adjusting a seat in the first area by the user; and
the adjustment unit is configured to:
in a process in which the detection unit detects that the user adjusts the seat, adjust the head-up display apparatus based on a change of the eye position information.

22. The apparatus according to claim 21, wherein the apparatus further comprises:
a control unit, configured to: in the process in which the detection unit detects that the user adjusts the seat, control the head-up display apparatus to display prompt information, wherein the prompt information is used to prompt the user that the head-up display apparatus is being adjusted.

23. The apparatus according to claim 21 or 22, wherein the adjustment unit is further configured to:
when the detection unit detects that the user stops the operation of adjusting the seat, stop adjusting the head-up display apparatus.

24. The apparatus according to claim 21 or 22, wherein the adjustment unit is further configured to:
within second preset duration starting from detecting, by the detection unit, that the user stops the operation of adjusting the seat, adjust the head-up display apparatus based on a change of the eye position information.

25. The apparatus according to claim 24, wherein the adjustment unit is further configured to:
when the second preset duration ends, stop adjusting the head-up display apparatus.

26. The apparatus according to any one of claims 15 to 25, wherein the determining unit is configured to:
filter out interference data in the image; and
determine the eye position information based on the image in which the interference data is filtered out.

27. The apparatus according to any one of claims 15 to 26, wherein the determining unit is further configured to:
determine, based on the eye position information, a height of a virtual image presented by the head-up display apparatus; and
the adjustment unit is configured to:
adjust the head-up display apparatus based on the height.

28. The apparatus according to any one of claims 15 to 27, wherein the carrier is a vehicle, and the first area comprises a driver area or a front passenger area.

29. An apparatus, comprising:
a memory, configured to store a computer program; and
a processor, configured to execute the computer program stored in the memory, to enable the apparatus to perform the method according to any one of claims 1 to 14.

30. An adjustment system, comprising a head-up display apparatus and a computing platform, wherein the computing platform comprises the apparatus according to any one of claims 15 to 29.

31. A carrier, comprising the apparatus according to any one of claims 15 to 29, or comprising the system according to claim 30.

32. The carrier according to claim 31, wherein the carrier is a vehicle.

33. A computer-readable storage medium, wherein the computer-readable storage medium stores a computer program; and when the computer program is executed by a computer, the method according to any one of claims 1 to 14 is implemented.

34. A chip, wherein the chip comprises a processor and a data interface, and the processor reads, through the data interface, instructions stored in a memory, to perform the method according to any one of claims 1 to 14.
